(19) Europäisches Patentamt

European Patent Office

Office européen des brevets

(11) **EP 0 628 339 B1**

(12) **EUROPEAN PATENT SPECIFICATION**

(45) Date of publication and mention
of the grant of the patent:
**08.09.1999 Bulletin 1999/36**

(51) Int. Cl.$^6$: **B01D 53/34**

(21) Application number: **94109124.1**

(22) Date of filing: **14.06.1994**

(54) **Method for extraction of undesirable substances in a biogas**

Verfahren zur Extraktion von unerwünschten Stoffen aus einem Biogas

Méthode pour l'extraction des substances indésirables d'un biogaz

(84) Designated Contracting States:
**AT BE CH DE DK ES FR GB GR IT LI LU NL SE**

(30) Priority: **14.06.1993 DK 70693**

(43) Date of publication of application:
**14.12.1994 Bulletin 1994/50**

(73) Proprietor:
**VESTERAGER, Niels Ole**
**24848 Kropp (DE)**

(72) Inventor: **VESTERAGER, Niels Ole**
**24848 Kropp (DE)**

(74) Representative:
**Halberg, Kristian et al**
**Hofman-Bang & Boutard,**
**Lehmann & Ree A/S,**
**Hans Bekkevolds Allé 7**
**2900 Hellerup (DK)**

(56) References cited:
**EP-A- 0 084 669**     **EP-A- 0 180 670**
**EP-A- 0 280 750**     **EP-A- 0 377 476**
**US-A- 4 356 155**     **US-A- 4 748 011**

- **DATABASE WPI Section Ch, Week 9222, Derwent Publications Ltd., London, GB; Class D05, AN 92-178966 & JP-A-4 114 799 (MEIDENSHA CORP.) 15 April 1992 & PATENT ABSTRACTS OF JAPAN vol. 16, no. 362 (C-0971) 5 August 1992 & JP-A-04 114 799 (MEIDENSHA CORP.) 15 April 1992**
- **DATABASE WPI Section Ch, Week 7930, Derwent Publications Ltd., London, GB; Class E10, AN 79-55741B & SU-A-626 796 (V.S.SOBOLEVSKII) 15 August 1978**
- **CHEMICAL ABSTRACTS, vol. 115, no. 10, 9 September 1991, Columbus, Ohio, US; abstract no. 95895, 'sulfane removal from biogas' & CS-A-268 269 (P. BURVAN ET AL.) 31 July 1990**
- **PATENT ABSTRACTS OF JAPAN vol. 4, no. 89 (C-016) 25 June 1980 & JP-A-55 051 426 (NIIGATA ENG. CO. LTD.) 15 April 1980**

**Description**

The present invention relates to a method of removing from a biogas carbon dioxide and sulphur and nitrogen containing compounds originating from anaerobic decomposition of biological material.

Various methods wherein a purification of gases is performed are known from SU-B-814,414, SU-B-768,440 and JP-A-54,100,975. All of these publications relate to removal of $H_2S$ during formation of ferric hydroxide. Further methods are known for removal of mercaptans and for removal of $NO_x$, e.g. with the use of active carbon.

The disadvantage of the known methods is that they do not to a sufficient extent permit the removal of many of the undesirable substances comprised in gases of the above-mentioned kind. Besides, many of the processes used in the prior art are very complicated and unsuitable for use in situ, e.g. on a farm. Finally, the prior art does not show how substances that are removed may be reused.

Various patents, such as DE-A-3,412,581 are known wherein formalin is used for various objects and wherein the use of formalin serves to remove ammonia and hydrogen cyanide during formation of $(CH_2)_6N_4$ and $CH_2(OH)CN$. While both ammonia and HCN are excellent nucleophile reagents which both react readily with formalin, hydrogen sulphide is a comparatively less ready nucleophile and will, therefore, react very slowly unless a catalyst is present.

DE-A-424,596 uses low concentrations of formalin which, combined with said metallic salts, shifts the balance of the ammonium carbonate in the manure on one hand towards ammonium chloride and on the other hand towards calcium- or magnesium carbonate , both of which are precipitated, and the ammonia is bound in an ammonium form which is free of smell and no longer volatile. Here the amount of formalin binds ammonia as a water-soluble product $NH_2CH_2OH$ analogously with DE-A-3,412,581.

The patent applications PCT WO-A-93/006063 and the patent GB-A-1,538,661 are prior art wherein ammonia is captured in an acid solution during formation of ammonium ions and respective anions, here sulphate and phosphate which are both water-soluble, that means they are not precipitated as precipitates.

As disclosed in DK patents 17,226 and 19,403, these both use a different regeneration procedure for the trivalent metallic oxyhydroxyde (FeOOH). The precipitated sulphurous compounds are also of a different type.

GB-A-673,187 and GB-A-879,112 do not describe a regenerating method of removing hydrogen sulphide, but rather use of an iron(II)sulphate in an alcaline solution for the formation of iron(III). DE-C-1,050,013 and US -A-2,641,526 both use a ferric oxy compound which may be regenerated by means of adding air, whereby sulphur is precipitated simultaneously.

EP-A-0 084 669 discloses a method of purifying a gas containing dust from a urea plant, in order to obtain removal of ammonia and other decomposition products of urea, wherein the gas is treated in an aqueous washing solution containing formaline.

EP-A-0 280 750 discloses a method of removing hydrogen sulphide from a gas comprising the steps of 1) effecting a microbial conversion of $FeSO_4$ to $Fe_2(SO_4)_3$, 2) bringing the gas in contact with an aqueous solution of the $Fe_2(SO_4)_3$ formed to form $FeSO_4$, $H_2SO_4$ and S, 3) separating the elemental sulphur formed, and 4) recirculating the $FeSO_4$ formed to step 1).

EP-A-0 377 476 discloses a method of removing ammonia from a gas, e.g. a gas originating from a boiindustial process, such as composting, wherein the gas is treated in an aqueous solution containing an acid, such as phophoric, hydrochloric, nitric or sulphuric acid, to form a salt, which is industrially reusable.

US-A-4 356 155 discloses a method of removing hydrogen sulphide from a gas, wherein the gas is treated in an aqueous solution of Fe(III)chelate of nitrilotriacetic acid to form crystalline sulphur.

The technical problem addressed by the invention is to provide a method of converting a biogas into a gas consisting essentially of methane and having such a reduced content of impurities that it corresponds to natural gas for all practical purposes and may be used as such.

This technical problem is solved by a method which is characterized in that the biogas is treated in one or more process steps with an aqueous solution of one or more chemical reaction means so as to form precipitates containing the said sulphur and nitrogen and carbon dioxide in the form of carbonate, wherein the chemical reaction means used to precipitate sulphur and nitrogen is selected from

I.a) M1(III)0(OH) and M2(III) wherein M1 and M2 each is any suitable metal ion, and any mixture thereof, resulting in the formation of precipitates containing sulphur, and

I.b) $M3HPO_4$, wherein M3 is $Mg^{2+}$, $Ca^{2+}$, $Ba^{2+}$, $Mn^{2+}$, $Fe^{2+}$, $Cu^{2+}$ or $Co^{2+}$, and any mixture thereof, resulting in the formation of precipitates containing nitrogen; and/or

II) aldehydes, ketones and organic acids and any mixture thereof, resulting in the formation of precipitates containing sulphur and/or nitrogen; and wherein the chemical reaction means used to precipitate carbon dioxide is selected from

III) a salt of M4, wherein M4 is $Na^+$, $Mg^{2+}$, $Ca^{2+}$, $Ba^{2+}$, $Be^{2+}$, $Co^{2+}$, $Zn^{2+}$, $Mn^{2+}$, $Fe^{2+}$, $Fe^{3+}$, $Cu^+$ or $Cu^{2+}$, and any mixture thereof, resulting in the formation of precipitates containing carbonate.

According to the method of the invention three types of compounds are removed from the biogas, 1) carbon dioxide, 2) nitrogen-containing compounds, primarily amines, mainly ammonia, and 3) sulphur-containing compounds, mainly hydrogen sulphide.

The invention is based on the recognition that the above stated technical problem may be solved by removing from the gas the said three types of compounds, and that this removal may be effected by using a combination of the reaction means (i)-(iv) outlined in claim 1.

The solution proposed by the invention is not obvious in view of the prior art discussed above, since the prior art does not disclose any of the reaction means of subgroups (ii), (iii) or (iv), since the prior art does not relate to the purification of biogas, and since the prior art does not disclose methods, wherein more than one type of compound is removed from the gas.

By this method it now becomes possible, by means of relatively simple chemical processes and with the use of simple reaction means, to remove several of the substances comprised in gases from the above-mentioned contexts. Moreover, the method according to the invention will ensure that most of the substances extracted by removal of the undesired substances may be reused as fertilizers in forestry, horticulture or agriculture or as other end products.

It will for example be possible to use the ammonia or other nitrogen compounds present e.g. in animal manure, waste water or other highly polluted liquids by performing a so-called ammonium stripping followed by the use of the method according to the present invention. In this manner the ammonia, together with other volative gases, may be converted into useful fertilizers in such a manner that the ammoinium evaporation is completely eliminated. The resulting precipitate fertilizers are particularly valuable compared to ordinary water-soluble fertilizers which are more or less liable to be washed out.

Furthermore, it will be possible completely to remove hydrogen sulphide or other sulphurous compounds from the treated gas. Many of these substances, like the nitrogen compounds, present environmental risks but they are also undesirable because of noxious smells. The hydrogen sulphide is removed in such a manner, that pure sulphur is extracted which may be reused as raw matter.

Finally, according to the present invention it is further possible to remove carbon dioxide, if any. If the gas is burned, it is also possible to remove $NO_x$ compounds from the treated gas. Thus, all the poisonous, environmentally detrimental or unpleasant gases present in the gas are decomposed while at the same a considerable part of the substances being removed are precipitated into chemical compounds which may be reused as fertilizers or as raw matter.

As the content of carbon dioxide in biogas is typically between 30 and 50%, it is very essential that the chemically active solution through which the gas must pass in order to initially remove hydrogen sulphide, does not react with the carbon dioxide of the biogas and also cannot dissolve the methane of the biogas.

As the amount of carbon dioxide in biogas is large, pH will fall in an aqueous solution and thus interfere with the elimination of $H_2S$ from the biogas. For the preparation of a chemically active solution one may use e.g. strongly polar organic compounds such as aldehydes and ketones in combination with the adding of inorganic ions as these ions will prevent the methane from dissolving in the organic compounds. Applicable cations may be sodium, potassium, magnesium, manganese, iron etc. The anion may be sulphate, halogenide, oxide, hydroxide etc.

With the method according to the invention it is easy and fast to change the content of individual reactants in the different process steps depending on the composition of the gas to be treated. Furthermore, removal of the chemical compounds contained in the gas may in several cases be performed in a random order.

The method is particularly useful for biogas since today there is no simple and economical way of purifying biogas so that one obtains the quality of natural gas, i.e. the biogas being purified of mercaptans, hydrogen sulphide, amines, ammonia and carbon dioxide so that the remaining product will be pure methane. The known methods of purifying biogas all operate primarily with physical parameters such as changing pressure and temperature, which may, however, be followed by a subsequent chemical treatment for purification and separation of the condensed products, such as described in GB-A-692,804 and GB-A-734,577.

Preferred embodiments of the invention are described in claims 2-8, to which reference is made.

The invention will now be described in further detail with reference to the accompanying drawing, wherein

Fig. 1 shows a flow diagram for a process passage according to the invention
Fig. 2 shows a second flow diagram of a process passage according to the invention,
Fig. 3 shows an additional flow diagram of a process passage according to the invention,
Fig. 4 shows a first embodiment of a process plant for use by the method according to the invention
Fig. 5 shows a second embodiment of a process plant for use by the method according to the invention
Fig. 6 shows the surface tension as a function of relative bubble diameter,
Fig. 7 shows the surface tension as a function of the concentration of a surface-active means,
Fig. 8 shows the bubble diameter as a function of surface tension and carbon dioxide removal as a function of surface tension, and
Fig. 9 shows surface tension as a function of the concentration of a surface-active means.

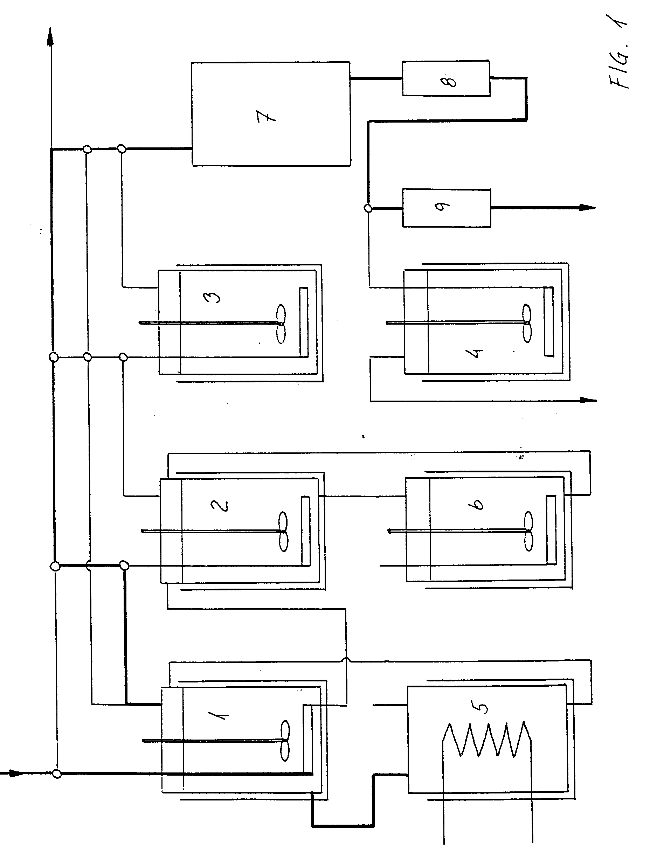

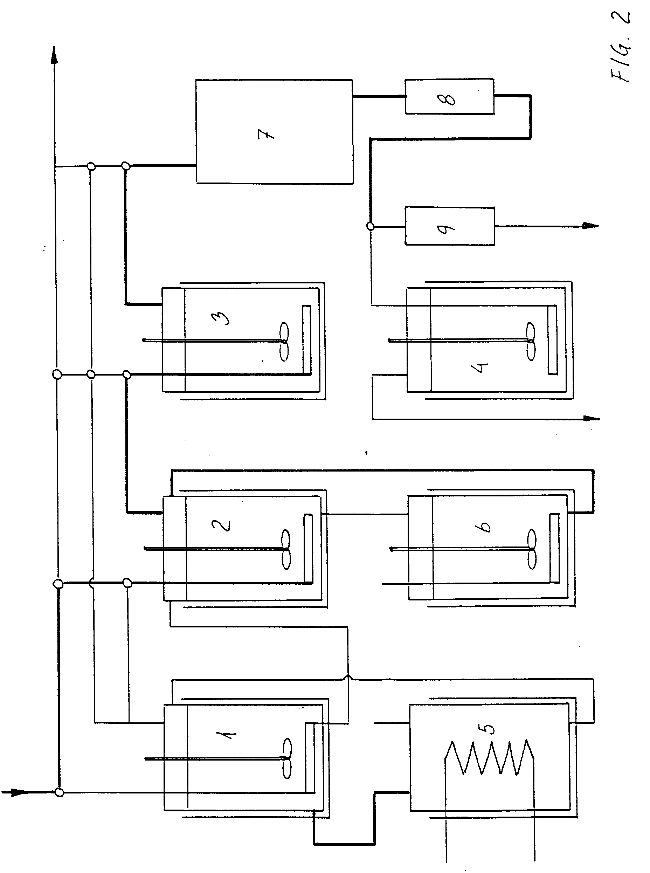

Fig. 1 shows a flow diagram of the method according to the invention. The diagram comprises a first, second, third and fourth process step 1, 2, 3 and 4. Furthermore, the diagram comprises two additional process steps 5 and 6 wherein end products are extracted. Finally the diagram also comprises a seventh process step 7 wherein the gas may be burned, an eighth process step 8 wherein waste gas is dehydrated, and a ninth process step 9 comprising an oven.

In each of the process steps 1, 2, 3, 4 and 6 there is provided a stirrer and a sieve or a filter for distribution of the substances added in the process steps. In process step 5 a heat exchanger is provided so that it is possible to add or remove heat from the process. Besides, the process steps are connected with each other as indicated by lines between the individual steps. Whether the lines are bold or thin depends on whether the gas is treated in all or just a few process steps. Valves between the individual process steps are illustrated by circles on the lines.

In Fig. 1 the gas is treated in the following process steps as illustrated by the shown flow diagram.

The gas contains nitrogen compounds $NR_1R_2R_3$ and sulphurous compounds, $SR_1R_2$. The nitrogen and sulphurous compounds may be e.g. ammonia, $NH_3$, and hydrogen sulphide, $H_2S$, respectively, which two substances will be used in the following as a basis for the description of the individual process steps.

The gas is led through a valve to the first process step containing an aqueous solution of either an aldehyde, a ketone, organic acids or acid chlorides, phosphate ions, metallic ions or an acid, e.g. phosphoric acid, $H_3PO_4$, or a mixture of these substances. In the following the basis for the aqueous solution used will be a solution of formaldehyde, $H_2CO$. The gas is bubbled through the aqueous solution while the latter is being stirred. The gas containing $NH_3$ and $H_2S$ will react with the formaldehyde, $H_2CO$, resulting in the following reactions:

$$4\ NH_3 + 6H_2CO \rightarrow C_6H_{12}N_4 + 6\ H_2O$$

$$3\ H_2S + 3H_2CO \rightarrow C_3H_6S_3 + 3H_2O$$

Hexamethylene tetramine, $C_6H_{12}N_4$, and trithio formaldehyde, $C_3H_6S_3$, are transferred to process step 5. Here the aqueous reaction solution is precipitated at low-temperature heating and under reduced pressure. Small amounts of thio compounds are removed through reaction with formaline. If one of the radicals in $SR_1R_2$ is constituted by anything but hydrogen, H, the following reaction will take place between the sulphurous compound and the aqueous solution of formaldehyde:

$$R_1SH + H_2CO \rightarrow R_1SCH_2OH \text{ or } (R_1S)_2CHOH$$

Other suitable reaction means for precipitation of stripped amines such as ammonia will be described later.

The gas that has been treated in process step 1 is thus liberated of $NH_3$ and $H_2S$ and then led directly to process step 7 where the gas is burned. In this burning $NO_x$ compounds may be formed which are led out of process step 7 as part of the waste gas from the burning. If the waste gas contains $NO_x$ compounds, a dehydration of the smoke gas is performed initially in process step 8 whereupon the waste gas is led to process step 4. Process step 4 contains an aqueous solution of a metallic salt, preferably $Fe_2SO_4(NO)_2$ whereby metallic nitrogen oxide salt is formed in a chemical process. This salt may be heated and recirculated.

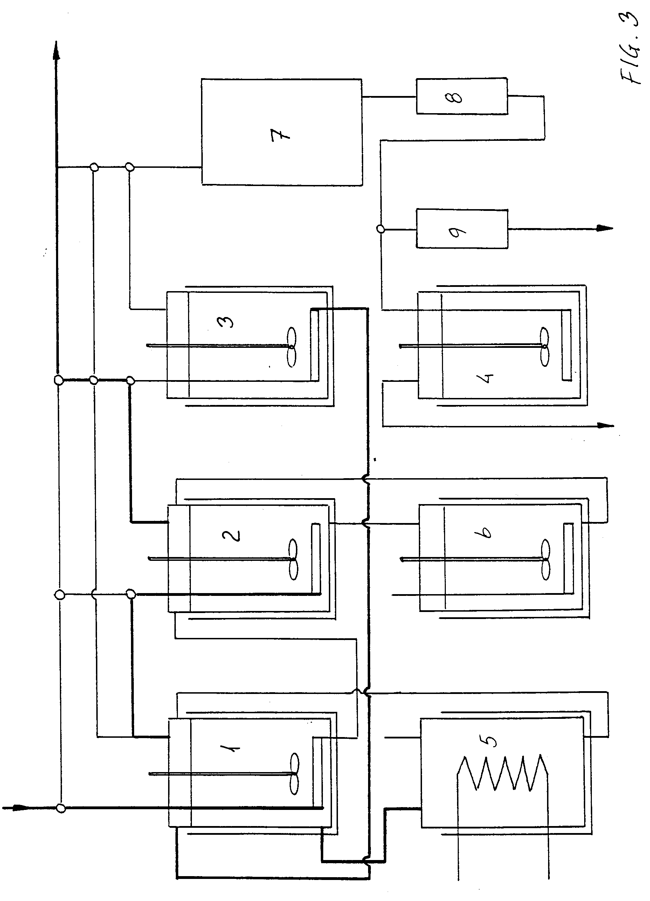

Fig. 2 shows a second flow of a process according to the invention. The gas has a high content of sulphurous compounds, $SR_1R_2$, and carbon dioxide, $CO_2$. The contents of nitrogen compounds, $NR_1R_2R_3$, is insignificantly small. In the following $H_2S$ will be used as a basis for the sulphurous compound. The gas is firstly treated in process step 2. If nitrogen compounds are present in the gas, it must first be treated in process step 1 in order to remove these compounds which would otherwise accumulate in process step 2. Process step 2 contains an aqueous solution of ferric oxyhydroxide, $FeO(OH)$, and the gas containing $H_2S$ will react with ferric oxyhydroxide, resulting in the following reactions:

$$3\ H_2S + 2\ Fe^{3+} + 3\ OH^- \rightarrow Fe_2S_3 + 3\ H^+ + 3\ H_2O$$

$$2\ Fe_2S_3 + 3\ O_2 + 2\ H_2O \rightarrow 4\ FeO(OH) + 6\ S$$

The precipitated ferric sulphide, $Fe_2S_3$, is led to process step 6 where atmospheric air is bubbled under stirring whereby ferric sulphide is oxidized into ferric oxyhydroxide, $FeO(OH)$, during liberation of free sulphur, S, as stated in the second equation. The ferric oxyhydroxide is recycled to process step 2 and the process is repeated. In process step 2 pH is adjusted by adding suitable chemical means. pH should preferably be between 5 and 8.

If the gas contains nitrogen compounds, $NR_1R_2R_3$, e.g. ammonia $NH_3$, the ammonia will react with the ferric oxyhydroxyde, $FeO(OH)$, resulting in the following reactions:

$$Fe^{3+} + 3\ NH_3 + 3\ H_2O \rightarrow Fe(OH)_3 + 3\ NH_4^+$$

$$Fe(OH)_3 \rightarrow FeO(OH) + H_2O$$

The gas is now free of undesirable, malodorous and poisonous substances and may be led to process step 3 for removal of $CO_2$.

Removal of $CO_2$ in process step 3 is accomplished by bubbling the gas while stirring with a chemically active solution of a suitable precipitation means, which is added to the process continuously. E.g. if process step 3 contains a metallic chloride as chemically active means, it will be consumed by bubbling with $CO_2$ during formation of metallic hydrogen carbonate, metal$(HCO_3)_y$, which is precipitated and removed from the process. The following reactions will happen, capital M signifying a metal:

$$MCl_y + y\ CO_2 + y\ NH_3 + y\ H_2O \rightarrow M(HCO_3)_y + y\ NH_4Cl$$

$$M(OH)_y + y\ NH_4Cl \rightarrow MCl_y + y\ NH_3 + y\ H_2O$$

To the formed ammonium chloride, $NH_4Cl$, is added, as stated in another equation, a base such as metallic hydroxyde, $M(OH)_y$, whereby ammonia and metallic carbonate may be used for adjusting pH in process 2. Removal of carbon dioxide, $CO_2$, is a cyclical process and requires no continuous addition of ammonia, $NH_3$.

After the gas has been treated in process step 2 and process step 3, it is free of sulphurous compounds and of $CO_2$. Afterwards the gas may optionally be led to process step 7 for burning. After burning the waste gas will only contain carbon dioxide, $CO_2$, and water, $H_2O$, as the acid oxides have been removed from the gas prior to the burning. The process may be performed with many different types of biological fuel, e.g. straw. If the waste gas contains compounds comprising $NO_x$, e.g. caused by a high burning temperature, these may be removed by first dehydrating the gas in process step 8 and then leading it to one of the following processes:

A) The waste gas is led through a filter containing concentrated sulphuric acid, $H_2SO_4$, and subsequently through an oven, process step 9, containing $FeX_2(s)$ as chemical reaction means. This will cause the formation of $Fe(NO)_nX$, wherein the X may be any one of the substances SK, Cl, I, $SR_1$, and wherein n = 1, 2 or 3. If the oven contains e.g. ferric chloride, $FeCl_2$, a formation of $Fe(NO)_3Cl$ will take place in the oven.

B) If the amount of $NO_x$ compounds formed during burning has a very low concentration, the waste gas may be led to process step 4. Here the waste gas is bubbled during stirring through a solution containing sulphuric acid, $H_2SO_4$, and ferrous sulphate, $FeSO_4$. In this manner $Fe_2SO_4(NO)_2$ and $FeSO_4NO$ are formed.

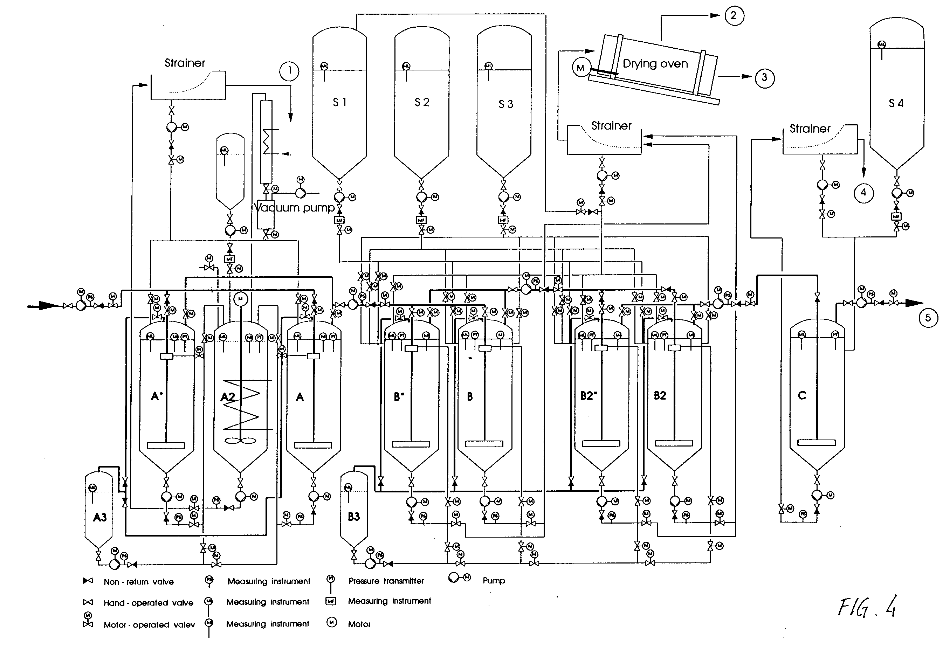

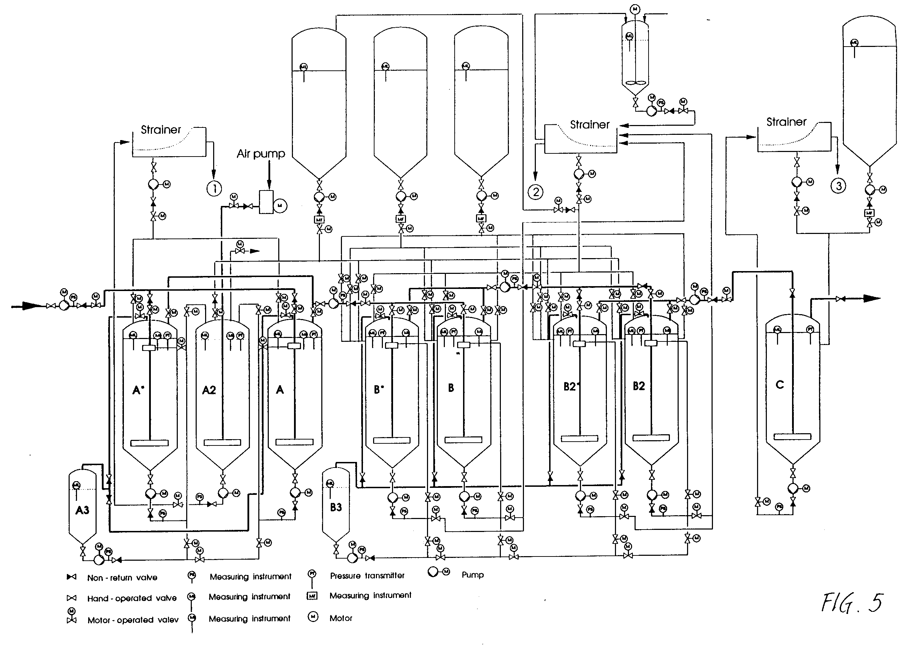

Fig. 3 shows another flow diagram for a method according to the invention. The gas contains a large share of nitrogen compounds, $NR_1R_2R_3$ and a low content of sulphurous compounds, $SR_1R_2$. The gas is led to process step 1 where the nitrogen compounds are removed by reaction with metal(II)hydrogen phosphate, $MHPO_4$, whereby metal(II)ammonium phosphate, $NH_4MPO_4$, is formed. The moll relationship between ammonia, metal (II) and phosphate may be 1:1:1, 2:1:2 or 4:1:2, respectively.

The formed metal(II)ammonium phosphate may, by heating or by chemical treatment, be caused to liberate ammonia, $NH_3$, which may be used in process step 3 for the removal of carbon dioxide, $CO_2$. Excessive metal(II)hydrogen phosphate may be recirculated to process step 1 for repeated reaction with ammonia or amines.

After having been treated in process step 1, the gas is led on to process step 2, which contains metal(III)oxyhydroxide, MO(OH). The contents of sulphurous compounds, $SR_1R_2$, in the gas will react with the metallic ion during formation of metal(III)sulphide, $M_2S_3$. In the following, $H_2S$ will be used as a basis for $SR_1R_2$, ferric oxyhydroxide, FeO(OH) will be used as a basis for metal(III)oxyhydroxide, and $Fe_2S_3$ will be used as a basis for metallic (III) sulphide. During addition of atmospheric air to process step 6, $Fe_2S_3$ may be reformed into ferric oxyhydroxide, FeO(OH), and free sulphur, S, during the following reactions:

$$3\ H_2S + 2\ Fe^{3+} + 3\ OH^- \rightarrow Fe_2S_3 + 3\ H^+ + 3\ H_2O$$

$$2\ Fe_2S_3 + 3\ O_2 + 2\ H_2O \rightarrow 4\ FeO(OH) + 6\ S$$

The sulphur is removed from the surface of the aqueous phase or by means of centrifugation. After regeneration, the water containing ferric oxyhydroxide, FeO(OH), is led back to process step 2, whereupon the process is repeated.

After $NR_1R_2R_3$ and $SR_1R_2$ have been removed from the gas, the gas is led on to process step 3 for removal of $CO_2$ as described in the text of Fig. 2. If removal of $CO_2$ is not desired, the gas is led directly to process step 7, alternatively directly to the recipient.

In the following individual specific tests and their results will be presented, which tests illustrate the effectiveness of the method according to the invention for treatment of gas from various sources.

TEST NO. 1:

10 liters of biogas are bubbled through an aqueous solution according to process step 1. The process step contains an aqueous solution of formaldehyde, $H_2CO$, whereby the contents of ammonia, $NH_3$, and hydrogen sulphide, $H_2S$, in the gas are removed. The composition of the gas prior to treatment is as follows:

$CH_4$:    64,4%
$CO_2$:    35,1%
$NH_3$:    0,1%1000 ppm
$H_2S$:    0,3%3000 ppm

During treatment the following reactions take place:

$$4\ NH_3 + 6\ CH_2O \rightarrow C_6H_{12}N_4 + 6\ H_2O$$

$$3\ H_2S + 3\ CH_2O \rightarrow C_3H_6S_3 + 3\ H_2O$$

The composition of the gas after treatment is as follows:

$CH_4$:    64,7%
$CO_2$:    35,3%
$NH_3$:    0,0004% 4 ppm
$H_2S$:    0,0002% 2 ppm

Analysis of $C_6H_{12}N_4$:

| calculated | C: 51.43% | H: 8.57% | N: 40.00% | S: - |
|---|---|---|---|---|
| analysed | C: 51.21% | H: - | N: 39.94% | S: - |

Analysis of $C_3H_6S_3$:

| calculated | C: 26.09% | H: 4.34% | N: - | S: 9.57% |
|---|---|---|---|---|
| analysed | C: 25.98% | H: - | N: - | S: 9.62% |

The biogas is not led through process step 2 as $H_2S$ has been removed by 99.99%. Whether carbon dioxide $CO_2$ is removed, depends on whether it is profitable in respect of the difference in sales price existing for biogas with and without carbon dioxide, respectively.

TEST NO. 2:

Waste water from a fish plant is stripped, e.g. by ventilation, whereby the volatile compounds are driven off the waste water. The resulting gas with the volatile compounds is led to process step 2 where the gas is bubbled through a solution containing ferric oxyhydroxyde, FeO(OH).
The contents of nitrogen and sulphurous compounds in the gas prior to treatment are:

$NR_1R_2R_3$:    2500 ppm
$SR_1R_2$:    3100 ppm

As the gas is bubbled in process step 2, ferric sulphides, $Fe_2S_3$, are formed and precipitated. If process step 2 takes place at a temperature of approx. 50°C, and if atmospheric air is added simultaneously, the nitrogen compounds will be driven off and they are subsequently led from process step 2 to process step 1. Phosphoric acid, $H_3PO_4$, is added in process step 1. When process step 1 is saturated with the nitrogen compounds, calcium carbonate, $CaCO_3$, is added for adjustment of pH to approx. 7.5. Then a phosphate compound will be precipitated, having the following composition: $(NR_1R_2R_3)_2Ca(HPO_4)_2, 2\ H_2O$

An analysis of the percentages of N, P and Ca, respectively, in the precipitated substances confirms the structure. A measure of N and P prior to the addition of calcium carbonate is necessary in order to establish the correct stoichiometric relationship between N and P and calcium carbonate, respectively. Other metallic ions than calcium, e.g. potassium K or magnesium Mg, may be added; it is merely a question of price and of the micro nutrient the finished fertilizer is supposed to contain. If for example magnesium carbonate is used, there is a possibility of a mixture of precipitated metallic phosphates:

I) $(NR_1R_2R_3H)_2Mg(HPO_4)_2, x\ H_2O$
II) $NR_1R_2R_3H_2MgPO_4, 1\text{-}6\ H_2O$

It is possible to control the process so that only one of the compounds is precipitated. The process wherein I) is precipitated takes place at a lower pH than that of the process wherein II) is precipitated. Moreover, the two processes take place under different stoichiometric conditions. II) is precipitated at 1 mol water of crystallization at a temperature above 75°C. Below that temperature, 6 mol water of crystallization will be the dominant compound.

An analysis of the percentages of N, P and Mg respectively confirm the two structures in the precipitate.

After having been treated in process step 2 and process step 1, the waste water is free of malodorous substances, and an analysis shows a reduction of $NR_1R_2R_3$ and $SR_1R_2$ of between 98% and 99.9%.

TEST NO. 3:

Manure, either degassed in order to reduce excess ammonia or not, is subjected to ammonia stripping. After the stripping, the manure is free of most of the nitrogen compounds and therefore, usually on exemption, it may be spread on suitable areas. The stripped ammonia is of approximately 30%, which is an increase of the concentration from approximately 0.4% in the raw manure. The stripping is preferably accomplished by adding metalphosphate to the manure whereby metalammonium phosphate is precipitated. The precipitated metalammonium phosphate is subjected to a chemical or thermal treatment by addition of base or by heating, whereby the ammonia is liberated in a gaseous form. By the chemical or thermal treatment metalphosphate ions are precipitated which may be recirculated in the stripping process, or which may be reused in process step 1 according to the present invention.

The stripped ammonia is treated by the method according to the invention. Hereby a crystalline substance, e.g. in the form of $C_6H_{12}N_4$, $(NH_4)_2M(HPO_4)_2$ or $NH_4MPO_4$, is formed. This leaves a remaining concentration of the stripped 30% ammonia of 0.1 - 10 ppm.

The choice of fertilizer precipitate depends on local conditions, including the possibility of buying phosphor. If the option of buying phosphor is available, ammonia from the manure stripping is treated in process step 1 with phosphate by addition of acid in the form of phosphorous acid or by addition of other phosphate substances such as metal(II)hydrophosphate. If there is excess phosphor in the area where the fertilizer precipitate is to be spread, one may add formaldehyde in process step 1 so that a non-phosphate precipitate is precipitated.

The gas from the biogas is led to process step 2 where the sulphurous compounds are removed as described in Fig. 1.

If part of the stripped ammonia from the manure is led directly to process step 3, the content of carbon dioxide in the biogas will, under stirring, bubble up through the chemically active solution of metallic chloride wherein preferably sodium chloride, NaCl, will be used. In this manner sodium hydrogen carbonate, $NaHCO_3$, is precipitated from the resulting solution containing ammonium chloride. The ammonia is regenerated by adding sodium hydroxide whereby the regenerated ammonia and sodium chloride may be reused for removal of carbon dioxide. The following reactions will take place:

$$NaCl + H_2O + CO_2 + NH_3 \rightarrow NaHCO_3 + NH_4Cl$$

$$NH_4Cl + NaOH \rightarrow NH_3 + NaCl$$

The ammonium chloride solution may be led to process 1 and is processed in process step 2 or as non-phosphate fertilizer precipitate. The formed sodium hydrogen carbonate may be used for pH adjustment in process step 1 if a fertilizer precipitate having the structure $(NH_4)_xM_yH_z(PO_4)_v$ is to be precipitated, wherein M is one of the following divalent metals: Mg, Ca, Ba, Mn, Fe, Cu, Co, and wherein, for x = 1, 2 or 4, y = 1, z = 0, 1 or 2, and v = 1 or 2.

It has turned out surprisingly that a mixture of divalent metallic ions may advantageously be used for precipitation of amines such as ammonia and ammonium ions as considerably lower concentrations of nitrogen and phosphor will remain at a lower pH than if the metal alone were present in the solution.

After burning e.g. biogas or solid biofuel at high temperatures, the waste gas may contain acid oxides such as $NO_x$, which may be removed as described in Fig. 2.

TEST NO. 4:

$NO_x$ is added to a 50% solution of ferrous sulphate in concentrated sulphurous acid by bubbling through the solution under simultaneous stirring. Hereby $FeSO_4NO$ is precipitated at process step 4. The precipitated $FeSO_4NO$ may be recycled under liberation of nitrogen oxide, which reacts with the oxygen of the air under formation of nitrogen dioxide, $NO_2$, which, through reaction with water, is transformed into fertilizers in the following reactions:

$$2 \, FeSO_4NO + O_2 \rightarrow 2 \, FeSO_4 + 2 \, NO_2$$

$$2 \, NO_2 + H_2O \rightarrow HNO_3 + HNO_2$$

The flows that are illustrated and described in the Figures and the above tests are only examples of how the method according to the invention may be used for removal of undesirable substances in a gas and for formation of substances which may be reused as end products or for recycling. The variation of substances that may be extracted is considerable, and generally the extractable substances have the following composition: $C_xH_yN_zM_{x1}P_{y1}O_{z1}S_vK_t$ wherein x, y, z, x1, z1, v, t may have the following values:

| | |
|---|---|
| x = | 0, 1, 2, 3, 4 .... |
| y = | 0, 2, 4, 6, 8 .... |
| z = | 0, 1, 2, 3, 4 .... |
| x1 = | 0, 1, 2 |
| y1 = | 0, 1, 2, 3, 4 .... |
| z1 = | 0, 2, 4, 6, 8 .... |
| v = | 0, 1, 2, 3, 4 .... |
| t = | 0, 1, 2, 3 |

If x=6, y=12, z=12 and x1=y1=z1=v=t=0, the result is $C_6H_{12}N_4$.
If x=2, y=4, z=2, z1=2 and x1=y1=v=t=0, the result is $C_2H_4O_2N_2$.
If x=3, y=6, v=3 and z=x1=y1=z1=t=0, the result is $C_3H_6S_3$.

All processes will take place at pH between 3 and 14 and at a temperature of between -5°C and 150°C.

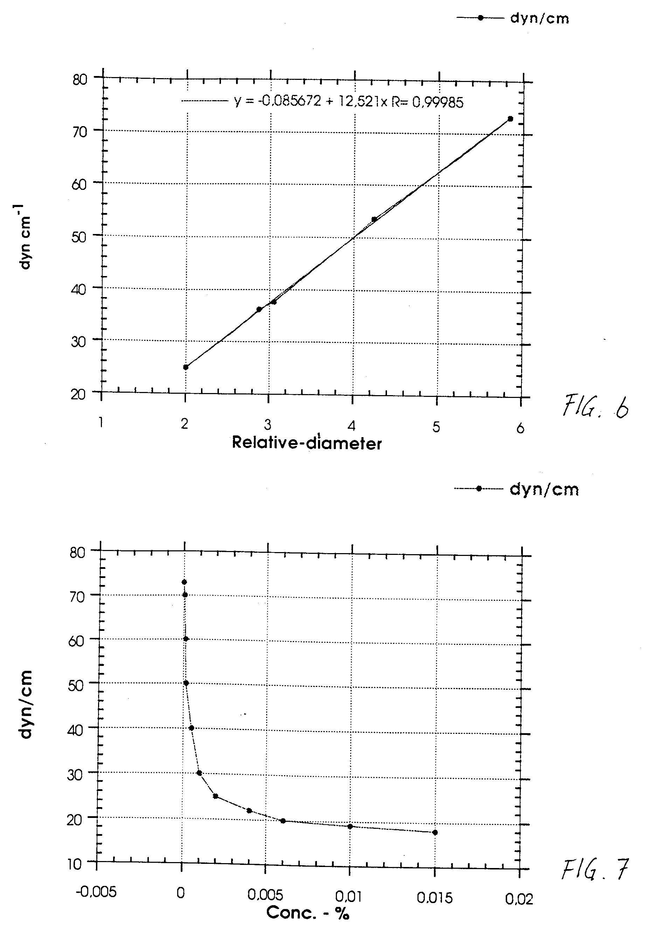

Fig. 4 illustrates a first embodiment of a process plant for use by the method according to the invention.

At first the biogas is led to A*, where the content of the hydrogen sulphide of the biogas is removed. For removing hydrogen sulphide it has surprisingly turned out that if formalin is used in which sodium hydroxide is dissolved sodium hydroxide gives a catalytic effect on the reaction speed. If a surface-active substance is added to the solution of formalin and sodium hydroxide, this will provide a reduction in the bubble-diameter, which causes an increase of the biogas concentration per volume unit of the chemical active solution. This results in a great increase of hydrogen sulphide removal from the biogas. Mixings of low- and high-ethoxylated surface-active substances may be used. A share too high of low-ethoxylated compounds will result in a removal of the methane of the biogas. When the biogas is led through a chemical active solution as described above, different products are made, i.a. gem-dithiolanes and a cyclic trimer $C_3H_6S_3$, the cyclic trimer is the predominant end product. However, it has turned out that the reaction speed between the formalin and the hydrogen sulphide is too slow to catch and form the trimer desired. Accordingly, an addition of alkali corresponding to 1/3 of the hydrogen sulphide amount and a surface-active agent is important for reducing the surface tension from 73 dyn/cm to 22 dyn/cm. The reaction speed is increased approximately 10 times by adding sodium hydroxide. The change of the surface tension increases the speed approximately 3 times, see Fig. 6. The result has appeared by keeping the pressure, the temperature and the rate of flow constant through a chemically active solution. As the biogas may contain traces of ammonia small amounts of $NH_2CH_2OH$ and $(CH_2)_6N_4$ may be formed when the biogas is bubbled through the chemically active solution. An increase of the hydroxide ion concentration accelerates the process further and reduces the solubility of methane in the formalin, and restrains simultaneously the forming of $(CH_2)_6N_4$.

Biogas:

Compounding before treatment:

| methane | 65.20% |
|---|---|
| carbon dioxide | 34.53% |
| hydrogen sulphide | 0.28% |
| nitrogen | 0.09% |

the content of water has been neglected

The compounding of the gas after treatment:

| methane | 99.12% |
|---|---|
| carbon dioxide | 0.34% |
| hydrogen sulphide | 0.0002% |
| nitrogen | 0.09% |
| water | 0.45% |

Fig. 7 shows the surface tension as a function of the concentration of the surface-active agent.

The biogas is at the bottom pumped into a tank A* and the gas is dispersed in small bubbles through a diffuser in such a way that the surface of the gas is as large as possible. Simultaneously with the biogas-bubbles upward direction, these are met by a downward water current consisting of the chemical active solution. By using said procedure the contact time of the biogas with the chemical active solution is increased.

When the concentration of formalin in tank A* is below a specified level a valve is closed and the biogas is led to tank A. The tank A contains the same chemical active solution as tank A* and the cleaning process is continued in tank A as in tank A*.

The solution in tank A* with the formed cyclic trimer ($C_3H_6S_3$) is pumped into the reaction tank A2. The tank A3 contains the same dissolved chemicals which are/were present in tank A*. The purpose of pumping liquid from tank A3 into tank A*, so that the latter is completely full, serves as certainty that all the biogas is removed from A* before the resultant liquid is transferred to A2 during air intake in tank A*. Hereby the danger of explosion is avoided.

When the whole amount in tank A* is transferred into tank A2 the latter is heated to a temperature of 55°C and the pressure is reduced to 0.5 atm. of pressure. Water is distilled off to approximately half volume. The remaining part of the liquid containing the cyclic trimer ($C_3H_6S_3$) is pumped to a strain, where the cyclic trimer ($C_3H_6S_3$) is separated from the chemical active solution, which is led back into tank A*, where the equivalent amount of formalin is added, corresponding to the cyclic trimer ($C_3H_6S_3$) removed from the solution. The distillate from A2 is led back into tank A*. A* is now once more ready for biogas cleaning.

When the biogas has passed A* and the hydrogen sulphide is removed, the biogas is pumped into tank B* where the gas is pressed through a diffuser to obtain a surface as large as possible. The upward bubbles meet a strong counter-current of a chemical active solution, which increases the contact time between the carbon dioxide of the biogas and the solution.

The aqueous solution consists primarily of ammonia and an inorganic salt where the cation may be mono- or bivalent. The anion may be halogen, sulphate or phosphate. The speed with which the carbon dioxide may be removed from the biogas is partly dependent on the biogas speed through the solution, the diameter of the biogas bubbles and the speed with which the carbon dioxide reacts with the chemically active solution. Physical parameters such as pressure and temperature obviously also have an influence on the reaction speed.

Surprisingly, it has turned out that by changing the surface tension of the solution the dredging effect for the biogas is also changed, i.e. the speed is changed with which the carbon dioxide is removed.

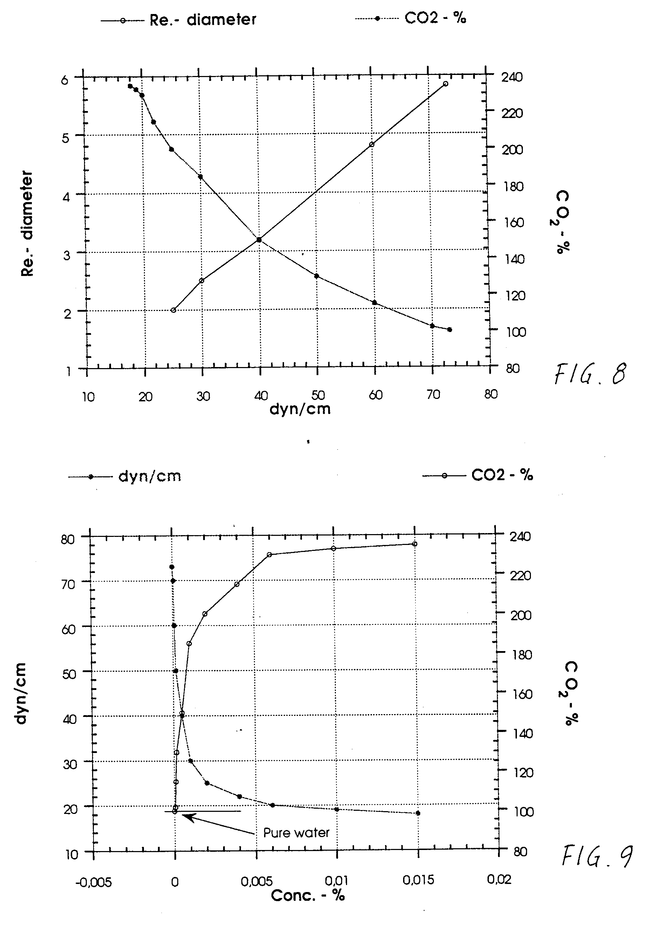

As Fig. 6 shows the diameters of the bubbles are directly proportional to the surface tension of the chemically active solution. Simultaneously, it is shown that the removal of the carbon dioxide follows the bubble diameter for the biogas, Fig. 8. It means that the reaction speed between the carbon dioxide and the chemically active solution is increased. As shown in Fig. 9 the removal of carbon dioxide is inversely proportional to the surface tension, which is of great importance for the biogas flow through the plant and accordingly for the size of the plant.

Fig. 9 is produced in such a way that 100% $CO_2$ represents a certain biogas flow through the chemically active solution where the carbon dioxide of the biogas is removed. By adding a surface-active substance the biogas flow is increased in such a way that the carbon dioxide of the biogas just is removed. 200% $CO_2$ are equivalent to a doubling of the biogas flow.

The tanks B* and B2* work at the same time, i.e. after the biogas has left B* it is pumped into B2* in which the same process is repeated as in B*, as it is the same chemically active solutions. Two tanks are used of practical reasons. When the chemically active solution in e.g. tank B* is consumed (i.e. the carbon dioxide is precipitated as a sparingly soluble carbonate), the whole content of the tank is pumped to a strain where the sparingly soluble carbonate is removed and the liquid is led back to tank B* for regeneration and adjusting by adding new chemicals so that the process may be repeated. Tank B2* undergoes the same procedure as tank B*. Tank B* is processed more often than tank B2* as the majority of the carbon dioxide is removed by passage of the first tank B*. Tank B3 pumps water into tank B* as well as into tank B2* in order to prevent forming of methane pockets in the tanks before the pumping out of the resulting chemically active liquids for cleaning, regeneration and adjusting. While said cleaning procedure, regeneration and adjusting has taken place for the tanks B* and B2* the biogas is led to the tanks B and B2 for the removal of carbon dioxide. When these tanks (B and B2) have reacted completely, i.e. the precipitate material is used, they undergo the same procedure as for the tanks B* and B2*.

A constant measuring of ammonia and carbon dioxide in the tanks B*,B2*,B and B2 takes care that the concentration in the chemically active solutions all the time are at a maximum, which simultaneously reduces the solubility of the methane in the liquids.

The sparingly soluble carbonate is regenerated in the heater and is transferred to silo 3 in order to be re-used in the process as a base (metaloxide). Silo 1 contains ammonia (alkali) and silo 2 metalsalt, e.g. $CaCl_2$, $MgCl_2$, NaCl etc. For this example $CaCl_2$ is used.

The biogas is now free of hydrogen sulphide, ammonia and carbon dioxide, but because of the volatility of ammonia the methane contains small amounts of ammonia from the tanks (B*,B,B2* and B2) which are removed in tank C.

Tank C contains phosphoric acid by which the ammonia is catched. By adding the just precipitated and produced base CaO (from the tanks B*, B2*, B and B2) a sparingly soluble double salt $(NH_4)_2Ca(HPO_4)_2,H_2O$ is precipitated, at a pH value between 5.2 and 8.0. By precipitating the ammonia as a sparingly soluble phosphate, process step C may run continuously with a constant removal of the precipitated diammonium-calcium-diphosphate.

With regard to fertilizing diammonium-calcium-diphosphate has great interest, as the crops grow surprisingly better than a corresponding fertilizer with the same content of nitrogen and phosphor in percentages. If magnesium oxide had been used as a base, the corresponding diammonium-magnesium-diphosphate would have been precipitated with the same interesting fertilizing effect as described above. Mixing of the bases is also possible as the fertilizer product thereby changes the water-solubility.

The biogas is now converted into pure methane and nay be led on to a natural gas system. All process steps for the whole system are measured and automatically controlled by PLC. The plant is controlled on the basis of the following measurements: hydrogen sulphide, carbon dioxide, ammonia, water, nitrogen and methane and the pH value, conductivity and the surface tension.

The precipitated products from the tanks A*, A and C are used as sulphurous, nitrogenous and phosphorous fertilizer and are produced as precipitates.

Fig. 5 shows a second embodiment where the content of A* and A is replaced with ferrioxysulphate or ferrioxyhydroxide in stead of formalin. Besides ferrioxyhydroxide the A* and A solution also consists of surface-active substances. The surface-active substances are primarily non-ionic, non-foaming and are primarily chosen among the surface-active substances containing silicones and fluorine, as only extremely small amounts are necessary in order to obtain the desired effect. The advantage of using a tervalent oxysalt, as e.g. ferrioxysulphate and ferrioxyhydroxide, is that they can be regenerated again after having reacted during precipitation with the hydrogen sulphide of the biogas. However, it has to be noted that at a high content of carbon dioxide it may be more practical to use iron(III)chloride in an acid environment wherein iron (III) is converted into iron (II) and free sulphur. Iron (II) may then be regenerated into acid iron(III).

Said method aims at using the acid oxide in the biogas as a buffer in connection with the precipitation of hydrogen sulphide in an acid environment according to the following:

$$4Fe^{3-} + 2H_2S \rightarrow Fe^{2+} + 2S + 4H^+ \qquad (1A)$$

Regenerating step

$$4Fe^{2+} + 2H_2O + O_2 \rightarrow 4Fe^{3+} + 4OH^{-1} \hspace{4cm} (2A)$$

and the process may be repeated.

A non-ionic silicone-containing surface-active substance has been added, which is inactive with regard to iron(II)/(III). The purpose of the surface-active substance is as earlier described.

The biogas is pumped into tank A* in which the above described reaction takes place (1A). When the entire amount of iron (III) has been converted into iron (II) the content is pumped from A* to a strain or separator where the sulphur is removed. The resulting solution which is now free from sulphur is pumped into tank A2. In tank A2 atmospheric air is pumped through the diffuser and the regeneration takes place after reaction (2A). After the regeneration the content in A2 is pumped back into tank A*.

During the regeneration the biogas is pumped into tank A for removal of hydrogen sulphide. When the chemically active solution in tank A has ended the same procedure as described for tank A* is carried out.

After the removal of hydrogen sulphide the remaining part of the biogas is pumped into the tanks B*,B2*,B,B2 and C where the same procedure as in Fig. 4 takes place.

## Claims

1. A method of removing from a biogas carbon dioxide and sulphur and nitrogen containing compounds originating from microbial anaerobic decomposition of biological material, **characterized** in that the biogas is treated in one or more process steps with an aqueous solution of one or more chemical reaction means so as to form precipitates containing the said sulphur and nitrogen and carbon dioxide in the form of carbonate, wherein the chemical reaction means used to precipitate sulphur and nitrogen is selected from

   I.a) M1(III)0(OH) and M2(III) wherein M1 and M2 each is any suitable metal ion, and any mixture thereof, resulting in the formation of precipitates containing sulphur, and
   I.b) M3HPO$_4$, wherein M3 is Mg$^{2+}$, Ca$^{2+}$, Ba$^{2+}$, Mn$^{2+}$, Fe$^{2+}$, Cu$^{2+}$ or Co$^{2+}$, and any mixture thereof, resulting in the formation of precipitates containing nitrogen; and/or
   II) aldehydes, ketones and organic acids and any mixture thereof, resulting in the formation of precipitates containing sulphur and/or nitrogen; and wherein the chemical reaction means used to precipitate carbon dioxide is selected from
   III) a salt of M4, wherein M4 is Na$^+$, Mg$^{2+}$, Ca$^{2+}$, Ba$^{2+}$, Be$^{2+}$, Co$^{2+}$, Zn$^{2+}$, Mn$^{2+}$, Fe$^{2+}$, Fe$^{3+}$, Cu$^+$ or Cu$^{2+}$, and any mixture thereof, resulting in the formation of precipitates containing carbonate.

2. A method according to claim 1, **characterized** in that the reaction means selected from group II is formaldehyde.

3. A method according to claim 1 or 2, **characterized** in that M1 is Fe$^{3+}$.

4. A method according to claim 1 or 2, **characterized** in that M2 is Fe$^{3+}$.

5. A method according to any of the proceeding claims, **characterized** in that the reaction means are selected from the groups (ii) and (III).

6. A method according to any of the claims 1-4, **characterized** in that the reaction means are selected from the groups (I.a), (I.b) and (III).

7. A method according to claim 6, **characterized** in that the nitrogen containing compounds are removed in a first step, that the sulphur containing compounds are removed in a second step and that the carbon dioxide are removed in a third step.

8. A method according to any of the preceding claims, **characterized** in that the salt of M4 is a sulphate, a phosphate or a halogenide of M4 in an alcaline solution.

## Patentansprüche

1. Verfahren zum Entfernen von Kohlendioxid, Schwefel und Stickstoff aus einem Biogas, enthaltend Verbindungen aus mikrobischer und anaerobischer Zersetzung von biologischem Material, dadurch gekennzeichnet, daß das Biogas in einem oder mehreren Verfahrensschritten mit einer wäßrigen Losung von einem oder mehreren chemischen Reaktionsmitteln so behandelt wird, daß sich ein Niederschlag bildet, der den genannten Schwefel, Stickstoff und das genannte Kohlendioxid in Form von Carbonaten enthält, wobei das zum Ausfällen von Schwefel und Stickstoff gebrauchte chemische Reaktionsmittel ausgewählt ist aus

I. a) M1(III)O(OH) und M2(III), wobei M1 und M2 jedes geeignete Metallion und jede Mischung davon bedeutet, wodurch sich Schwefel enthaltende Niederschläge bilden, und

I. b) M3HPO$_4$, wobei M3 Mg$^{2+}$, Ca$^{2+}$, Ba$^{2+}$, Mn$^{2+}$, Fe$^{2+}$, Cu$^{2+}$ oder Co$^{2+}$ und jede Mischung davon bedeutet, wodurch sich Stickstoff enthaltende Niederschläge bilden; und/oder

II) Aldehyden, Ketonen und organischen Säuren und jeder Mischung davon, wodurch sich Schwefel und/oder Stickstoff enthaltende Niederschläge bilden;

und wobei die zum Ausfällen von Kohlendioxid verwendeten chemischen Reaktionsmittel ausgewählt sind aus

III) einem Salz von M4, wobei M4 Na$^+$, Mg$^{2+}$, Ca$^{2+}$, Ba$^{2+}$, Be$^{2+}$, Co$^{2+}$, Zn$^{2+}$, Mn$^{2+}$, Fe$^{2+}$, Fe$^{3+}$, Cu$^+$ oder Cu$^{2+}$ und jede Mischung davon bedeutet, wodurch sich Carbonat enthaltende Niederschläge bilden.

2. Verfahren nach Anspruch 1, dadurch gekennzeichnet, daß das Reaktionsmittel aus Gruppe II Formaldehyd ist.

3. Verfahren nach Anspruch 1 oder 2, dadurch gekennzeichnet, daß M1 Fe$^{3+}$ ist.

4. Verfahren nach Anspruch 1 oder 2, dadurch gekennzeichnet, daß M2 Fe$^{3+}$ ist.

5. Verfahren nach einem der vorhergehenden Ansprüche, dadurch gekennzeichnet, daß die Reaktionsmittei aus den Gruppen (II) und (III) ausgewählt sind.

6. Verfahren nach einem der Ansprüche 1 bis 4, dadurch gekennzeichnet, daß die Reaktionsmittel aus den Gruppen (I.a), (I.b) und (III) ausgewählt sind.

7. Verfahren nach Anspruch 6, dadurch gekennzeichnet, daß die Stickstoff enthaltenden Verbindungen in einem ersten Schritt entfernt werden, daß die Schwefel enthaltenden Verbindungen in einem zweiten Schritt entfernt werden, und daß das Kohlendioxid in einem dritten Schritt entfernt wird.

8. Verfahren nach einem der vorhergehenden Ansprüche, dadurch gekennzeichnet, daß das Salz von M4 ein Sulfat, ein Phosphat oder ein Halogenid von M4 in einer alkalischen Lösung ist.

**Revendications**

1. Procédé pour séparer d'un biogaz des composés contenant du dioxyde de carbone, du soufre et de l'azote provenant de la décomposition anaérobique microbienne de matériel biologique, caractérisé en ce que le biogaz est traité en une ou plusieurs étapes de procédé avec une solution acqueuse d'un ou plusieurs moyens de réaction chimique de façon à former des précipités contenant lesdits soufre, azote, et dioxyde de carbone sous la forme de carbonates, dans lequel les moyens chimiques utilisés pour précipiter le soufre et l'azote sont sélectionnés à partir de

Ia) M1(III) 0 (OH) et M2 (III) dans lesquels M1 et M2 sont chacun un ion métallique convenable quelconque, ou un mélange quelconque de ceux-ci, résultant en la formation de précipités contenant du soufre, et

I.b) M3PHO$_4$, dans lequel M3 est Mg$^{2+}$, Ca$^{2+}$, Ba$^{2+}$, Mn$^{2+}$, Fe$^{2+}$, Cu$^{2+}$, ou Co$^{2+}$, et tout mélange quelconque de ceux-ci, resultant en la formation de précipités contenant de l'azote; et/ou

II) des aldéhydes, des cétones, et des acides organiques et tout mélange quelconque de ceux-ci, résultant en la formation de précipités contenant du soufre ou/et de l'azote;

et dans lequel les moyens de réaction chimique utilisés pour précipiter le dioxyde de carbone sont sélectionnés à partir de:

III) un sel de M4, dans lequel M4 est Na$^+$, Mg$^{2+}$, Ca$^{2+}$, Ba$^{2+}$, Be$^{2+}$, Co$^{2+}$, Zn$^{2+}$, Mn$^{2+}$, Fe$^{2+}$, Fe$^{3+}$, Cu$^+$ et Cu$^{2+}$, et tout mélange quelconque de ceux-ci, resultant en la formation de précipités contenant du carbonate.

2. Procédé selon la revendication 1, caractérisé en ce que le moyen de réaction sélectionné à partir du groupe II est le formaldéhyde.

3. Procédé selon la revendication 1 ou 2, caractérisé en ce que M1 est $Fe^{3+}$.

4. Procédé selon la revendication 1 ou 2, caractérisé en ce que M2 est $Fe^{3+}$.

5. Procédé selon l'une quelconque des revendications précédentes, caractérisé en ce que les moyens de réaction sont sélectionnés à partir des groupes (II) et (III).

6. Procédé selon l'une quelconque des revendications 1 à 4, caractérisé en ce que les moyens de réaction sont sélectionnés à partir des groupes (I.a), (I.b) et (III).

7. Procédé selon la revendication 6, caractérisé en ce que les composés contenant de l'azote sont séparés lors d'une première étape, en ce que les composés contenant du soufre sont séparés lors d'une deuxième étape et en ce que ceux contenant du dioxyde de carbone sont séparés lors d'une troisième étape.

8. Procédé selon l'une quelconque des revendications précédentes, caractérisé en ce que le sel de M4 est un sulfate, un phosphate ou un halogénure de M4 en solution alcaline.

FIG. 1

FIG. 2

FIG. 3

EP 0 628 339 B1

FIG. 4

Strainer

Air pump

Strainer

Strainer

A*  A2  A  B*  B  B2*  B2  C

A3  B3

▷◁ Non - return valve    Ⓟ Measuring instrument    Ⓟ Pressure transmitter    Pump

⋈ Hand - operated valve    Ⓠ Measuring instrument    Ⓜ Measuring instrument

⋈ Motor - operated valev    Ⓠ Measuring instrument    Ⓜ Motor

FIG. 5

FIG. 6

FIG. 7

FIG. 8

FIG. 9